# EUROPÄISCHE PATENTSCHRIFT

(11) **EP 3 964 749 B1**
(45) Veröffentlichungstag und Bekanntmachung des Hinweises auf die Patenterteilung: **26.06.2024**
(21) Anmeldenummer: 20194247.1
(22) Anmeldetag: 03.09.2020
(51) Int. Cl.: F21S 43/241, F21S 43/245, F21V 8/00, B60Q 1/28, B60Q 1/30, B60Q 1/32, F21W 102/13, F21W 102/17, F21W 103/00

(54) **BELEUCHTUNGSVORRICHTUNG FÜR EIN KRAFTFAHRZEUG**
LIGHTING DEVICE FOR A MOTOR VEHICLE
DISPOSITIF D'ÉCLAIRAGE POUR UN VÉHICULE AUTOMOBILE

(43) Veröffentlichungstag der Anmeldung: 09.03.2022
(73) Patentinhaber: ZKW Group GmbH, 3250 Wieselburg (AT)
(72) Erfinder: Leonhartsberger, Lukas, 3332 Rosenau (AT); Maier, Christian, 3281 Oberndorf an der Melk (AT); Strohmüller, Alexander, 3370 Ybbs (AT)
(74) Vertreter: Patentanwaltskanzlei Matschnig & Forsthuber OG

(56) Entgegenhaltungen:
- EP-A1- 2 317 212
- WO-A1-2016/154647
- DE-A1-102016 115 278
- DE-A1-102017 127 355
- JP-A- 2012 190 762
- US-A1- 2014 003 075

## Beschreibung

Die Erfindung betrifft eine Beleuchtungsvorrichtung für ein Kraftfahrzeug, umfassend:
- ein Leuchtmittel zum Erzeugen von Licht;
- einen Lichtleiter, zum Leiten und Abstrahlen des Lichts, welches von dem Leuchtmittel erzeugt wird, wobei der Lichtleiter erste Licht-Auskoppel-Elemente aufweist, welche entlang des gesamten Lichtleiters angeordnet und dazu eingerichtet sind, einen ersten Anteil des Lichts, welches in dem Lichtleiter geleitet wird, in einer ersten Richtung aus dem Lichtleiter auszukoppeln, wobei der erste Anteil des Lichts nach dem Auskoppeln auf eine erste Lichteintrittsfläche eines erstes Leuchtelements trifft und über die erste Lichteintrittsfläche in das erste Leuchtelement eintritt, durch das erste Leuchtelement durchtritt, und an einer ersten Lichtaustrittsfläche des ersten Leuchtelements austritt.

Die Erfindung betrifft weiters ein Kraftfahrzeug mit einer Beleuchtungsvorrichtung.

Aus dem Stand der Technik sind Beleuchtungsvorrichtungen für Kraftfahrzeuge bekannt, wobei die Beleuchtungsvorrichtungen Leuchtelemente umfassen und dazu eingerichtet sind, die Leuchtelemente zu beleuchten. Die Leuchtelemente können durch die Beleuchtung mittels der Beleuchtungsvorrichtung selbst eine Lichtfunktion erzeugen, die Beleuchtung der Leuchtelemente kann aber auch eine Sicherheitsfunktion haben, da durch die Beleuchtung die Leuchtelemente besser sicherbar werden. Das Dokument DE 10 2016 115 278 A1 zeigt eine Beleuchtungseinrichtung für ein Kraftfahrzeug mit mindestens einem Leuchtmittel, wobei das Licht des Leuchtmittels mittels eines Einkoppelbereichs in einen gestreckt ausgebildeten Lichtleiter einkoppelbar ist. Aus dem Dokument DE 10 2017127 355 A1 ist eine Leuchte für eine Kraftfahrzeugkarosserie bekannt, mit einem Lichtleiter zur Lichtemission, welchem eine Lichtquelle zur Erzeugung von Lichtstrahlen zugeordnet ist, und wobei eine optische Scheibe zur weiteren Lichtemission ausgebildet ist.

Sollen nun weitere Leuchtelemente mit der Beleuchtungsvorrichtung beleuchtet werden, kommen im Stand der Technik zusätzliche Leuchtmittel mit zusätzlichen Lichtleitern zum Einsatz, welche die weiteren Leuchtelemente beleuchten. Dies ist kostenintensiv und erhöht die bauliche Komplexität der Beleuchtungsvorrichtung.

Die Aufgabe der vorliegenden Erfindung besteht darin, die Nachteile des Standes der Technik zu lindern bzw. zu beseitigen. Die Erfindung setzt sich daher insbesondere zum Ziel, eine Beleuchtungsvorrichtung zu schaffen, bei welcher die Beleuchtung von Leuchtelementen verbessert wird.

Diese Aufgabe wird durch eine Beleuchtungsvorrichtung mit den Merkmalen von Anspruch 1 gelöst. Bevorzugte Ausführungen sind in den abhängigen Ansprüchen angegeben.

Erfindungsgemäß weist der Lichtleiter zweite Licht-Auskoppel-Elemente auf, welche entlang eines Teilbereichs des Lichtleiters angeordnet und dazu eingerichtet sind, einen zweiten Anteil des Lichts, welches in dem Lichtleiter geleitet wird, in einer zweiten Richtung aus dem Lichtleiter auszukoppeln, wobei die erste und die zweite Richtung unterschiedlich sind, wobei
- eine Reflektorvorrichtung vorgesehen ist, welche dazu eingerichtet ist, das Licht, welches von den zweiten Licht-Auskoppel-Elementen ausgekoppelt wird, dergestalt umzulenken, dass das Licht nach dem Umlenken parallel zu der ersten Richtung orientiert ist, wobei das Licht, nach dem Umlenken durch die Reflektorvorrichtung, auf eine zweite Lichteintrittsfläche eines zweiten Leuchtelements abgestrahlt wird und über die zweite Lichteintrittsfläche in das zweite Leuchtelement eintritt, durch das zweite Leuchtelement durchtritt, und an einer zweiten Lichtaustrittsfläche des zweiten Leuchtelements austritt.

Dadurch ergibt sich der Vorteil, dass mit einem einzigen Leuchtmittel und einem, vorzugsweise einem einzigen, dem Leuchtmittel zugeordneten Lichtleiter, welcher zwei unterschiedliche Gruppen von Licht-Auskoppel-Elementen aufweist, erste und zweite Leuchtelemente beleuchtbar sind. Die erste und/oder zweite Lichtaustrittsfläche kann dergestalt ausgebildet sein, dass das Licht, nach dem Austritt aus dem ersten und/oder zweiten Leuchtelement diffus abgestrahlt wird. Insbesondere kann die erste und/oder zweite Lichtaustrittsfläche Streuelemente, beispielsweise einen Diffusor, aufweisen, welche dazu eingerichtet sind, dass Licht beim Austritt dergestalt zu streuen, dass das Licht aus der ersten und/oder zweiten Lichtaustrittsfläche diffus austritt. Durch die diffuse Abstrahlung von Licht weisen die ersten und/oder zweiten Leuchtelemente eine homogenere bzw. eine über die jeweiligen Lichtaustrittsflächen konstante Lichtabstrahlcharakteristik auf, wodurch ein besonders gleichmäßiges bzw. ein homogeneres Leuchterscheinungsbild erreicht werden kann. Ein homogenes Leuchterscheinungsbild (bzw. eine homogene Lichtabstrahlcharakteristik) bedeutet in diesem Zusammenhang, dass pro Lichtaustrittsfläche die Beleuchtungsstärke bzw. die abgestrahlte Lichtintensität konstant bzw. gleich groß ist und/oder die Gesamtlichtabstrahlung einen kontinuierlichen Verlauf aufweist. Vorzugsweise ist eine erste Gruppe von Licht-Auskoppel-Elementen, welche entlang des gesamten Lichtleiters angeordnet sein können, einem ersten Leuchtelement und eine zweite Gruppe von Licht-Auskoppel-Elementen, welche entlang eines Teils des Lichtleiters angeordnet sein können, einem zweiten Leuchtelement zugeordnet, um das entsprechende Leuchtelement zu beleuchten. Die erste Richtung kann in Richtung HV orientiert sein, wobei die zweite Richtung orthogonal zur ersten Richtung ausgebildet sein kann. Vorzugsweise sind die Lichtstrahlen nach dem Umlenken durch die Reflektorvorrichtung in Richtung HV orientiert. HV ist in diesem Zusammenhang der Schnittpunkt der vertikalen und horizontalen Achse in einem Isolux Diagramm, welches, beispielsweise gemäß ECE Regelungen, entsteht, wenn ein Kraftfahrzeugscheinwerfer einen 25 m entfernten Messschirm beleuchtet. In Richtung HV kann dahingehend verstanden werden, dass das Licht hauptsächlich um einen kleinen Bereich um den Punkt HV abgestrahlt wird bzw. einen kleinen Bereich um den Punkt HV beleuchtet. Die ersten und/oder zweiten Leuchtelemente können eine Lichtaustrittsfläche aufweisen, welche an einer der jeweiligen Lichteintrittsfläche abgewandten Seite des entsprechenden Leuchtelements angeordnet ist. Die beleuchteten ersten und zweiten Leuchtelemente können eine Beleuchtungsfunktion bereitstellen. Das Leuchtmittel kann beispielsweise eine oder mehrere LEDs umfassen.

Er kann vorgesehen sein, dass das erste und zweite Leuchtelement zueinander beabstandet sind. Vorzugsweise umfassen das erste und das zweite Leuchtelement das gleiche Material. Das Material kann einen transparenten Kunststoff umfassen.

Es kann vorgesehen sein, dass die erste Lichteintrittsfläche erste optische Streuelemente zum Streuen des Lichts beim Eintritt in das erste Leuchtelement aufweist.

Es kann vorgesehen sein, dass die zweite Lichteintrittsfläche zweite optische Streuelemente zum Streuen des Lichts beim Eintritt in das zweite Leuchtelement aufweist. Die ersten und/oder zweiten optischen Streuelemente können als Narbung, welche sich insbesondere über die gesamte erste und/oder zweite Lichteintrittsfläche erstreckt, ausgebildet sein.

Gemäß der beanspruchten Erfindung ist vorgesehen, dass das erste Leuchtelement einen ersten länglichen Leuchtkörper und das zweite Leuchtelement eine Vielzahl von zweiten länglichen Leuchtkörpern umfasst.

Es kann vorgesehen sein, dass die zweiten Leuchtkörper jeweils kleiner sind als der erste Leuchtkörper. Die zweiten Leuchtkörper sind insbesondere kürzer als der erste Leuchtkörper. Der erste und/oder die zweiten Leuchtkörper können als länglicher Zylinder oder länglicher Quader ausgebildet sein.

Es kann vorgesehen sein, dass die zweiten Leuchtkörper im Wesentlichen parallel zu einander orientiert und vorzugsweise beabstandet zu einander sind. Die zweiten Leuchtkörper sind insbesondere in gleichmäßigen Abständen zu einander angeordnet.

Es kann vorgesehen sein, dass die zweiten Leuchtkörper jeweils im Wesentlichen orthogonal zu dem ersten Leuchtkörper orientiert sind.

Gemäß der beanspruchten Erfindung ist vorgesehen, dass die zweiten Licht-Auskoppel-Elemente durch eine Vielzahl von zueinander beabstandeten zweiten Auskoppel-Element-Gruppen gebildet sind, welche entlang des Lichtleiters dergestalt angeordnet sind, dass jeweils eine zweite Auskoppel-Element-Gruppe Licht in Richtung eines zweiten Leuchtkörpers, welcher der entsprechenden Auskoppel-Element-Gruppe zugeordnet ist, auskoppelt. Mit anderen Worten wird jeweils Licht, von einer einem zweiten Leuchtkörper zugeordneten Auskoppel-Element-Gruppe, in Richtung des zweiten Leuchtkörpers ausgekoppelt. Die Anzahl der zweiten Auskoppel-Element-Gruppen ist vorzugsweise gleich der Anzahl an zweiten Leuchtkörpern. Durch die Umlenkung des Lichts mittels der Reflektorvorrichtung kann das Licht auf die Lichteintrittsfläche des entsprechenden zweiten Leuchtkörpers umgelenkt werden. Durch die Umlenkung ist das Licht vorzugsweise parallel zu der ersten Richtung orientiert.

Es kann vorgesehen sein, dass das erste Leuchtelement parallel zu dem Lichtleiter orientiert ist. Vorzugsweise kontaktiert eine Lichtauskoppelfläche des Lichtleiters die gesamte erste Lichteintrittsfläche des ersten Leuchtelements.

Es kann vorgesehen sein, dass die ersten und/oder zweiten Licht-Auskoppel-Elemente jeweils prismenartig ausgebildet sind.

Es kann vorgesehen sein, dass der Lichtleiter eine geschlossene Bahnkurve bildet, welche Bahnkurve vorzugsweise nierenförmig ausgebildet ist.

Es kann vorgesehen sein, dass das erste Leuchtelement entlang der Bahnkurve verläuft. Vorzugsweise verläuft das zweite Leuchtelement orthogonal zur Längsrichtung der Bahnkurve.

Es kann vorgesehen sein, dass die Reflektorvorrichtung eine Vielzahl von Reflektoren umfasst, welche jeweils dazu eingerichtet sind, das Licht, welches von den zweiten Licht-Auskoppel-Elementen ausgekoppelt wird, parallel zur ersten Richtung und auf die Lichteinkoppelfläche des zweiten Leuchtelements umzulenken. Vorzugsweise ist jeder Reflektor gleichartig bzw. baugleich ausgebildet.

Es kann vorgesehen sein, dass die Reflektoren jeweils mit einem Metall, vorzugsweise Aluminium, beschichtet sind. Die Beschichtung erfolgt vorzugsweise mittels Bedampfung des Reflektors mit einem Metall. Dadurch ergibt sich der Vorteil, dass die Reflektoren, im Vergleich zu reinen Metallreflektoren, ein geringeres Gewicht aufweisen.

Es kann vorgesehen sein, dass die Reflektoren in einem gleichmäßigen Raster zueinander angeordnet sind. Insbesondere liegen die einzelnen Reflektoren in ein und derselben Ebene.

Es kann vorgesehen sein, dass die ersten und zweiten Licht-Auskoppel-Elemente dergestalt ausgebildet sind, dass das erste und das zweite Leuchtelement mit einer gleich großen Beleuchtungsstärke beleuchtet werden. Dadurch weisen vorteilhafterweise die ersten und zweiten Leuchtelemente eine gleich große Beleuchtung bzw. ein homogenes Leuchterscheinungsbild auf.

Es kann vorgesehen sein, dass das erste und/oder das zweite Leuchtelement als transparenter Vollkörper ausgebildet sind. Das erste und/oder zweite Leuchtelement kann insbesondere einen Kunststoff umfassen.

Erfindungsgemäß ist ein Kraftfahrzeug vorgesehen, welches eine vorstehend beschriebene Beleuchtungsvorrichtung aufweist.

Es kann vorgesehen sein, dass die Beleuchtungsvorrichtung an einer Vorderseite des Kraftfahrzeugs, vorzugsweise zwischen den Kraftfahrzeugscheinwerfern des Kraftfahrzeugs, angeordnet ist.

Im Rahmen dieser Beschreibung sind die Begriffe "oben", "unten", "horizontal", "vertikal" als Angaben der Ausrichtung zu verstehen, wenn die Beleuchtungsvorrichtung in normaler Benutzungsstellung angeordnet ist, nachdem sie beispielsweise in einem Kraftfahrzeug eingebaut wurde.

Die Erfindung wird nachstehend anhand eines bevorzugten Ausführungsbeispiels, auf das sie jedoch nicht beschränkt sein soll, noch weiter erläutert. In den Zeichnungen zeigt:
Fig. 1 eine Ausführungsform einer erfindungsgemäßen Beleuchtungsvorrichtung;
Fig. 2 eine Detailansicht der Beleuchtungsvorrichtung gemäß Fig. 1; und
Fig. 3 eine Detailansicht eines Lichtleiters der Beleuchtungsvorrichtung.

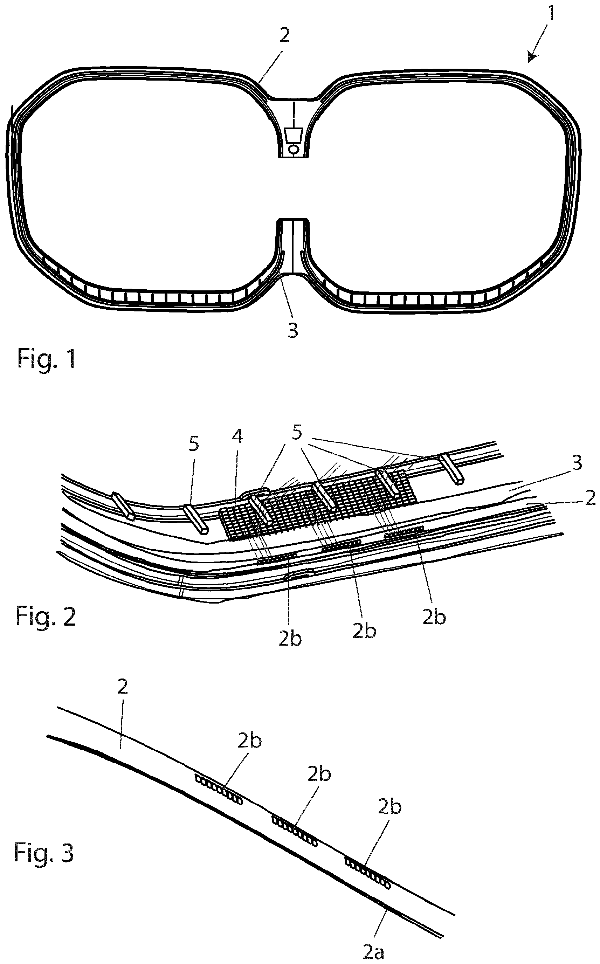

Fig. 1 und im Detail Fig. 2 zeigen eine Beleuchtungsvorrichtung 1 mit einem Lichtleiter 2, welcher in dem gezeigten Ausführungsbeispiel entlang einer geschlossenen Bahnkurve ausgebildet ist, wobei die Bahnkurve vorzugsweise nierenförmig ausgebildet ist. Ein erstes Leuchtelement 3 verläuft entlang der Bahnkurve. Die Beleuchtungsvorrichtung 1 umfasst ferner ein Leuchtmittel (nicht gezeigt) zum Erzeugen von Licht. Der Lichtleiter 2 ist zum

Leiten und Abstrahlen des Lichts, welches von dem Leuchtmittel erzeugt wird, ausgebildet. Der Lichtleiter 2 weist erste Licht-Auskoppel-Elemente 2a auf, welche entlang des gesamten Lichtleiters angeordnet und dazu eingerichtet sind, einen ersten Anteil des Lichts, welches in dem Lichtleiter 2 geleitet wird, in einer ersten Richtung aus dem Lichtleiter 2 auszukoppeln. Der erste Anteil des Lichts trifft nach dem Auskoppeln auf eine erste Lichteintrittsfläche des ersten Leuchtelements 3, um dieses zu beleuchten. Die erste Lichteintrittsfläche weist erste optische Streuelemente zum Streuen des Lichts beim Eintritt in das erste Leuchtelement 3 auf. Damit kann das erste Leuchtelement 3 eine homogene, insbesondere eine besonders homogene, bzw. gleichmäßige Lichtverteilung abstrahlen. Das erste Leuchtelement 3 ist in dem gezeigten Ausführungsbeispiel parallel zu dem Lichtleiter 2 orientiert. Die Beleuchtungsvorrichtung kann beispielsweise an einer Vorderseite eines (nicht gezeigten) Kraftfahrzeugs, insbesondere zwischen den Frontscheinwerfern eines Kraftfahrzeugs, angeordnet sein.

Wie in Fig. 2 und 3 ersichtlich, weist der Lichtleiter 2 zweite Licht-Auskoppel-Elemente 2b auf, welche entlang eines Teilbereichs des Lichtleiters 2 angeordnet und dazu eingerichtet sind, einen zweiten Anteil des Lichts, welches in dem Lichtleiter 2 geleitet wird, in einer zweiten Richtung aus dem Lichtleiter 2 auszukoppeln, wobei die erste und die zweite Richtung unterschiedlich sind. Die erste Richtung kann in Richtung HV orientiert sein, wobei die zweite Richtung vorzugsweise orthogonal zur ersten Richtung orientiert ist. Die ersten 2a und/oder zweiten Licht-Auskoppel-Elemente 2b sind jeweils prismenartig ausgebildet.

Die Beleuchtungsvorrichtung 1 umfasst ferner eine Reflektorvorrichtung 4, welche dazu eingerichtet ist, das Licht, welches von den zweiten Licht-Auskoppel-Elementen 2b ausgekoppelt wird, dergestalt umzulenken, dass das Licht nach dem Umlenken parallel zu der ersten Richtung orientiert ist, wobei das Licht, nach dem Umlenken durch die Reflektorvorrichtung 4, auf eine zweite Lichteintrittsfläche eines zweiten Leuchtelements 5 abgestrahlt wird, um dieses zu beleuchten. Die Reflektorvorrichtung 4 umfasst eine Vielzahl von Reflektoren, welche jeweils dazu eingerichtet sind, das Licht, welches von den zweiten Licht-Auskoppel-Elementen 2b ausgekoppelt wird, parallel zur ersten Richtung und auf die Lichteinkoppelfläche des zweiten Leuchtelements umzulenken. Die Reflektoren sind jeweils mit einem Metall, vorzugsweise Aluminium, beschichtet und in einem gleichmäßigen Raster zueinander angeordnet.

Die zweite Lichteintrittsfläche weist zweite optische Streuelemente zum Streuen des Lichts beim Eintritt in das zweite Leuchtelement 5 auf. Das erste 3 und zweite Leuchtelement 5 sind zueinander beabstandet. Das erste Leuchtelement 3 ist als erster länglicher Leuchtkörper ausgebildet und das zweite Leuchtelement 5 ist aus einer Vielzahl von zweiten länglichen Leuchtkörpern gebildet. Der erste und/oder zweite Leuchtkörper kann als transparenter Voll- oder Hohlkörper ausgebildet sein, durch welchen Licht durchtreten kann. Die zweiten Leuchtkörper sind jeweils kleiner als der erste Leuchtkörper und die zweiten Leuchtkörper sind im Wesentlichen parallel zu einander orientiert und vorzugsweise beabstandet zu einander. Wie in Fig. 2 ersichtlich, sind die zweiten Leuchtkörper jeweils im Wesentlichen orthogonal zu dem ersten Leuchtkörper orientiert. Die ersten und zweiten Leuchtkörper sind insbesondere dazu eingerichtet, eine Lichtfunktion zu erzeugen bzw. abzustrahlen. Wie in Fig. 1 ersichtlich, sind die zweiten Leuchtkörper nur an einer Unterseite der Bahnkurve angeordnet. Die zweiten Leuchtkörper können aber auch entlang der gesamten Bahnkurve angeordnet sein.

Wie in Fig. 3 gezeigt sind die zweiten Licht-Auskoppel-Elemente 2b durch eine Vielzahl von zueinander beabstandeten Auskoppel-Element-Gruppen gebildet, welche entlang des Lichtleiters dergestalt angeordnet sind, dass jeweils eine Auskoppel-Element-Gruppe Licht in Richtung eines zweiten Leuchtkörpers, welcher der entsprechenden Auskoppel-Element-Gruppe zugeordnet ist, auskoppelt. Somit wird insbesondere ein zweiter Leuchtkörper von jeweils einer Auskoppel-Element-Gruppe beleuchtet. Die ersten 2a und zweiten Licht-Auskoppel-Elemente 2b sind dergestalt ausgebildet, dass das erste 3 und das zweite Leuchtelement 5 mit einer gleich großen Beleuchtungsstärke beleuchtet werden.

## Patentansprüche

1. Beleuchtungsvorrichtung (1) für ein Kraftfahrzeug, umfassend:
- ein Leuchtmittel zum Erzeugen von Licht;
- ein erstes Leuchtelement (3) und ein zweites Leuchtelement (5),
- einen Lichtleiter (2), zum Leiten und Abstrahlen des Lichts, welches von dem Leuchtmittel erzeugt wird, wobei der Lichtleiter (2) erste Licht-Auskoppel-Elemente (2a) aufweist, welche entlang des gesamten Lichtleiters angeordnet und dazu eingerichtet sind, einen ersten Anteil des Lichts, welches in dem Lichtleiter (2) geleitet wird, in einer ersten Richtung aus dem Lichtleiter (2) auszukoppeln, wobei der erste Anteil des Lichts nach dem Auskoppeln auf eine erste Lichteintrittsfläche des ersten Leuchtelements (3) trifft und über die erste Lichteintrittsfläche in das erste Leuchtelement (3) eintritt, durch das erste Leuchtelement (3) durchtritt, und an einer ersten Lichtaustrittsfläche des ersten Leuchtelements (3) austritt, wobei
der Lichtleiter (2) zweite Licht-Auskoppel-Elemente (2b) aufweist, welche entlang eines Teilbereichs des Lichtleiters (2) angeordnet und dazu eingerichtet sind, einen zweiten Anteil des Lichts, welches in dem Lichtleiter (2) geleitet wird, in einer zweiten Richtung aus dem Lichtleiter (2) auszukoppeln, wobei die erste und die zweite Richtung unterschiedlich sind, wobei
- eine Reflektorvorrichtung (4) vorgesehen ist, welche dazu eingerichtet ist, das Licht, welches von den zweiten Licht-Auskoppel-Elementen (2b) ausgekoppelt wird, dergestalt umzulenken, dass das Licht nach dem Umlenken parallel zu der ersten Richtung orientiert ist, wobei das Licht, nach dem Umlenken durch die Reflektorvorrichtung (4), auf eine zweite Lichteintrittsfläche des zweiten Leuchtelements (5) abgestrahlt wird und über die zweite Lichteintrittsfläche in das zweite Leuchtelement (5) eintritt, durch das zweite Leuchtelement (5) durchtritt, und an einer zweiten Lichtaustrittsfläche des zweiten Leuchtelements (5) austritt, **dadurch gekennzeichnet, dass**
das erste Leuchtelement (3) einen ersten länglichen Leuchtkörper und das zweite Leuchtelement (5) eine Vielzahl von zweiten länglichen Leuchtkörpern umfasst, wobei
die zweiten Licht-Auskoppel-Elemente (2b) durch eine Vielzahl von zueinander beabstandeten Auskoppel-Element-Gruppen gebildet sind, welche entlang des Lichtleiters dergestalt angeordnet sind, dass jeweils eine Auskoppel-Element-Gruppe Licht in Richtung eines zweiten Leuchtkörpers, welcher der entsprechenden Auskoppel-Element-Gruppe zugeordnet ist, auskoppelt.

2. Beleuchtungsvorrichtung (1) nach Anspruch 1, wobei das erste (3) und zweite Leuchtelement (5) zueinander beabstandet sind.

3. Beleuchtungsvorrichtung (1) nach einem der vorhergehenden Ansprüche, wobei die erste Lichteintrittsfläche erste optische Streuelemente zum Streuen des Lichts beim Eintritt in das erste Leuchtelement (3) aufweist.

4. Beleuchtungsvorrichtung (1) nach einem der vorhergehenden Ansprüche, wobei die zweite Lichteintrittsfläche zweite optische Streuelemente zum Streuen des Lichts beim Eintritt in das zweite Leuchtelement (5) aufweist.

5. Beleuchtungsvorrichtung (1) nach einem der vorhergehenden Ansprüche, wobei die zweiten Leuchtkörper jeweils kleiner sind als der erste Leuchtkörper.

6. Beleuchtungsvorrichtung (1) nach einem der vorhergehenden Ansprüche, wobei die zweiten Leuchtkörper im Wesentlichen parallel zu einander orientiert und vorzugsweise beabstandet zu einander sind.

7. Beleuchtungsvorrichtung (1) nach einem der vorhergehenden Ansprüche, wobei die zweiten Leuchtkörper jeweils im Wesentlichen orthogonal zu dem ersten Leuchtkörper orientiert sind.

8. Beleuchtungsvorrichtung (1) nach einem der vorhergehenden Ansprüche, wobei das erste Leuchtelement (3) parallel zu dem Lichtleiter (2) orientiert ist.

9. Beleuchtungsvorrichtung (1) nach einem der vorhergehenden Ansprüche, wobei die ersten (2a) und/oder zweiten Licht-Auskoppel-Elemente (2b) jeweils prismenartig ausgebildet sind.

10. Beleuchtungsvorrichtung (1) nach einem der vorhergehenden Ansprüche, wobei der Lichtleiter (2) eine geschlossene Bahnkurve bildet, welche Bahnkurve vorzugsweise nierenförmig ausgebildet ist, wobei vorzugsweise das erste Leuchtelement (3) entlang der Bahnkurve verläuft.

11. Beleuchtungsvorrichtung (1) nach einem der vorhergehenden Ansprüche, wobei die Reflektorvorrichtung (4) eine Vielzahl von Reflektoren umfasst, welche jeweils dazu eingerichtet sind, das Licht, welches von den zweiten Licht-Auskoppel-Elementen (2b) ausgekoppelt wird, parallel zur ersten Richtung und auf die Lichteinkoppelfläche des zweiten Leuchtelements umzulenken, wobei vorzugsweise die Reflektoren jeweils mit einem Metall, vorzugsweise Aluminium, beschichtet sind, wobei vorzugsweise die Reflektoren in einem gleichmäßigen Raster zueinander angeordnet sind.

12. Beleuchtungsvorrichtung (1) nach einem der vorhergehenden Ansprüche, wobei die ersten (2a) und zweiten Licht-Auskoppel-Elemente (2b) dergestalt ausgebildet sind, dass das erste (3) und das zweite Leuchtelement (5) mit einer gleich großen Beleuchtungsstärke beleuchtet werden.

13. Beleuchtungsvorrichtung (1) nach einem der vorhergehenden Ansprüche, wobei das erste (3) und/oder das zweite Leuchtelement (5) als transparenter Vollkörper ausgebildet sind.

14. Kraftfahrzeug, umfassend eine Beleuchtungsvorrichtung (1) nach einem der Ansprüche 1 bis 13, wobei vorzugsweise die Beleuchtungsvorrichtung (1) an einer Vorderseite des Kraftfahrzeugs, vorzugsweise zwischen den Kraftfahrzeugscheinwerfern des Kraftfahrzeugs, angeordnet ist.

## Claims

1. Lighting device (1) for a motor vehicle, comprising
- a light source for generating light;
- a first lighting element (3) and a second lighting element (5),
- a light guide (2) for guiding and radiating the light generated by the illuminant, the light guide (2) having first light decoupling elements (2a) arranged along the entire light guide and adapted to decouple a first portion of the light guided in the light guide (2) from the light guide (2) in a first direction, wherein the first portion of the light, after being coupled out, strikes a first light entry surface of the first lighting element (3) and enters the first lighting element (3) via the first light entry surface, passes through the first lighting element (3) and emerges at a first light exit surface of the first lighting element (3), wherein
the light guide (2) has second light decoupling elements (2b) which are arranged along a partial region of the light guide (2) and are arranged to decouple a second portion of the light which is guided in the light guide (2) from the light guide (2) in a second direction, the first and the second direction being different, wherein
- a reflector device (4) is provided, which is set up to deflect the light, which is coupled out by the second light decoupling elements (2b), in such a way that the light is oriented parallel to the first direction after the deflection, wherein the light, after the deflection by the reflector device (4), is directed onto a second light entry surface of the light guide (2), is emitted onto a second light entry surface of the second lighting element (5) and enters the second lighting element (5) via the second light entry surface, passes through the second lighting element (5) and emerges at a second light exit surface of the second lighting element (5),
**characterized in that**
the first light-emitting element (3) comprises a first elongate light-emitting body and the second light-emitting element (5) comprises a plurality of second elongate light-emitting bodies, wherein
the second light decoupling elements (2b) are formed by a plurality of mutually spaced decoupling element groups which are arranged along the light guide in such a way that in each case one decoupling element group decouples light in the direction of a second luminous body which is assigned to the corresponding decoupling element group.

2. Lighting device (1) according to claim 1, wherein the first (3) and second lighting element (5) are spaced apart from one another.

3. Lighting device (1) according to one of the preceding claims, wherein the first light-entry surface comprises first optical scattering elements for scattering the light as it enters the first lighting element (3).

4. Lighting device (1) according to one of the preceding claims, wherein the second light entry surface comprises second optical scattering elements for scattering the light when entering the second lighting element (5).

5. Lighting device (1) according to one of the preceding claims, wherein the second light-emitting elements are each smaller than the first light-emitting element.

6. Lighting device (1) according to one of the preceding claims, wherein the second luminous bodies are oriented substantially parallel to each other and preferably spaced apart from each other.

7. Lighting device (1) according to one of the preceding claims, wherein the second luminous bodies are each oriented substantially orthogonally to the first luminous body.

8. Lighting device (1) according to one of the preceding claims, wherein the first lighting element (3) is oriented parallel to the light guide (2).

9. Lighting device (1) according to one of the preceding claims, wherein the first (2a) and/or second light decoupling elements (2b) are each of prismatic design.

10. Lighting device (1) according to one of the preceding claims, wherein the light guide (2) forms a closed path curve, which path curve is preferably kidney-shaped, wherein preferably the first lighting element (3) extends along the path curve.

11. Lighting device (1) according to one of the preceding claims, wherein the reflector device (4) comprises a plurality of reflectors, which are each set up to deflect the light, which is coupled out by the second light decoupling elements (2b), parallel to the first direction and onto the light coupling surface of the second lighting element, wherein preferably the reflectors are each coated with a metal, preferably aluminum, wherein preferably the reflectors are arranged in a uniform grid relative to one another.

12. Lighting device (1) according to one of the preceding claims, wherein the first (2a) and second light decoupling elements (2b) are designed in such a way that the first (3) and the second lighting element (5) are illuminated with an illuminance of equal magnitude.

13. Lighting device (1) according to one of the preceding claims, wherein the first (3) and/or the second lighting element (5) are designed as a transparent solid body.

14. Motor vehicle, comprising a lighting device (1) according to one of claims 1 to 13, wherein preferably the lighting device (1) is arranged at a front side of the motor vehicle, preferably between the motor vehicle headlights of the motor vehicle.

## Revendications

1. Dispositif d'éclairage (1) pour un véhicule automobile, comprenant :
- un moyen d'éclairage pour produire de la lumière ;
- un premier élément d'éclairage (3) et un deuxième élément d'éclairage (5),
- un guide de lumière (2) pour guider et émettre la lumière générée par le moyen d'éclairage, le guide de lumière (2) ayant des premiers éléments d'extraction de lumière (2a) disposés le long du guide de lumière entier et adaptés pour extraire une première partie de la lumière guidée dans le guide de lumière (2) dans une première direction à partir du guide de lumière (2), la première partie de la lumière, après avoir été découplée, rencontre une première surface d'entrée de lumière du premier élément lumineux (3) et entre dans le premier élément lumineux (3) par la première surface d'entrée de lumière, traverse le premier élément lumineux (3) et sort par une première surface de sortie de lumière du premier élément lumineux (3), où
le guide de lumière (2) présente des deuxièmes éléments de découplage de lumière (2b) qui sont disposés le long d'une zone partielle du guide de lumière (2) et qui sont conçus pour découpler une deuxième partie de la lumière, qui est guidée dans le guide de lumière (2), dans une deuxième direction à partir du guide de lumière (2), la première et la deuxième direction étant différentes, où
- un dispositif réflecteur (4) est prévu, lequel est conçu pour dévier la lumière qui est découplée des deuxièmes éléments de découplage de la lumière (2b) de telle sorte que la lumière, après la déviation, est orientée parallèlement à la première direction, la lumière, après la déviation par le dispositif réflecteur (4), est rayonnée sur une deuxième surface d'entrée de lumière du deuxième élément lumineux (5) et entre dans le deuxième élément lumineux (5) par la deuxième surface d'entrée de lumière, traverse le deuxième élément lumineux (5) et sort par une deuxième surface de sortie de lumière du deuxième élément lumineux (5),
**caractérisé en ce que**
le premier élément lumineux (3) comprend un premier corps lumineux allongé et le deuxième élément lumineux (5) comprend une pluralité de deuxièmes corps lumineux allongés, dans lequel
les deuxièmes éléments de découplage de lumière (2b) sont formés par une pluralité de groupes d'éléments de découplage espacés les uns des autres, qui sont disposés le long du guide de lumière de telle sorte qu'un groupe d'éléments de découplage respectif découple la lumière en direction d'un deuxième corps lumineux qui est associé au groupe d'éléments de découplage correspondant.

2. Dispositif d'éclairage (1) selon la revendication 1, dans lequel le premier (3) et le deuxième (5) éléments lumineux sont espacés l'un de l'autre.

3. Dispositif d'éclairage (1) selon l'une quelconque des revendications précédentes, dans lequel la première surface d'entrée de lumière comprend des premiers éléments de diffusion optique pour diffuser la lumière lors de son entrée dans le premier élément lumineux (3).

4. Dispositif d'éclairage (1) selon l'une des revendications précédentes, dans lequel la deuxième surface d'entrée de lumière comporte des deuxièmes éléments optiques de diffusion de la lumière lors de l'entrée dans le deuxième élément lumineux (5).

5. Dispositif d'éclairage (1) selon l'une des revendications précédentes, dans lequel les deuxièmes éléments lumineux sont chacun plus petits que le premier élément lumineux.

6. Dispositif d'éclairage (1) selon l'une quelconque des revendications précédentes, dans lequel les deuxièmes corps lumineux sont orientés sensiblement parallèlement l'un à l'autre et sont de préférence espacés l'un de l'autre.

7. Dispositif d'éclairage (1) selon l'une quelconque des revendications précédentes, dans lequel les deuxièmes corps lumineux sont orientés chacun de manière sensiblement orthogonale par rapport au premier corps lumineux.

8. Dispositif d'éclairage (1) selon l'une des revendications précédentes, dans lequel le premier élément lumineux (3) est orienté parallèlement au guide de lumière (2).

9. Dispositif d'éclairage (1) selon l'une des revendications précédentes, dans lequel les premiers (2a) et/ou deuxièmes éléments de découplage de la lumière (2b) sont respectivement en forme de prisme.

10. Dispositif d'éclairage (1) selon l'une des revendications précédentes, dans lequel le guide de lumière (2) forme une courbe de trajectoire fermée, laquelle courbe de trajectoire est de préférence en forme de rein, le premier élément lumineux (3) s'étendant de préférence le long de la courbe de trajectoire.

11. Dispositif d'éclairage (1) selon l'une quelconque des revendications précédentes, dans lequel le dispositif réflecteur (4) comprend une pluralité de réflecteurs agencés chacun pour dévier la lumière extraite des deuxièmes éléments de découplage de lumière (2b) parallèlement à la première direction et sur la surface de couplage de lumière du deuxième élément lumineux, de préférence les réflecteurs étant chacun revêtus d'un métal, de préférence de l'aluminium, de préférence les réflecteurs étant agencés selon un réseau régulier les uns par rapport aux autres.

12. Dispositif d'éclairage (1) selon l'une quelconque des revendications précédentes, dans lequel les premier (2a) et deuxième (2b) éléments d'extraction de lumière sont configurés de telle sorte que le premier (3) et le deuxième élément lumineux (5) sont éclairés avec une intensité d'éclairage égale.

13. Dispositif d'éclairage (1) selon l'une des revendications précédentes, dans lequel le premier (3) et/ou le deuxième élément lumineux (5) sont réalisés sous la forme d'un corps plein transparent.

14. Véhicule automobile comprenant un dispositif d'éclairage (1) selon l'une des revendications 1 à 13, dans lequel de préférence le dispositif d'éclairage (1) est disposé sur une face avant du véhicule automobile, de préférence entre les projecteurs du véhicule automobile.
